(19) Europäisches Patentamt
European Patent Office
Office européen des brevets

(11) **EP 2 659 137 B1**

(12) **EUROPÄISCHE PATENTSCHRIFT**

(45) Veröffentlichungstag und Bekanntmachung des Hinweises auf die Patenterteilung:
**09.03.2016 Patentblatt 2016/10**

(21) Anmeldenummer: **11805525.0**

(22) Anmeldetag: **23.12.2011**

(51) Int Cl.:
*H02J 3/16* *(2006.01)*      *H02J 3/18* *(2006.01)*
*F03D 9/00* *(2016.01)*

(86) Internationale Anmeldenummer:
**PCT/EP2011/073981**

(87) Internationale Veröffentlichungsnummer:
**WO 2012/089675 (05.07.2012 Gazette 2012/27)**

(54) **WINDPARK UND VERFAHREN ZUM BETREIBEN EINES WINDPARKS**

WIND FARM AND METHOD FOR OPERATING A WIND FARM

PARC ÉOLIEN ET PROCÉDÉ PERMETTANT D'EXPLOITER UN PARC ÉOLIEN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.12.2010 DE 102010056456**

(43) Veröffentlichungstag der Anmeldung:
**06.11.2013 Patentblatt 2013/45**

(73) Patentinhaber: **Senvion GmbH**
**22297 Hamburg (DE)**

(72) Erfinder: **FORTMANN, Jens**
**13156 Berlin (DE)**

(74) Vertreter: **Glawe, Delfs, Moll**
**Partnerschaft mbB von**
**Patent- und Rechtsanwälten**
**Rothenbaumchaussee 58**
**20148 Hamburg (DE)**

(56) Entgegenhaltungen:
**EP-A1- 1 512 869       EP-A2- 1 643 609**
**DE-A1-102004 048 341   DE-A1-102007 044 601**
**DE-A1-102009 037 523**

• **Jens Fortmann ET AL: "A NOVEL CENTRALISED WIND FARM CONTROLLER UTILISING VOLTAGE CONTROL CAPABILITY OF WIND TURBINES", , 18 July 2008 (2008-07-18), XP055139449, Retrieved from the Internet: URL:http://www.pscc-central.org/uploads/tx _ethpublications/pscc2008_159.pdf [retrieved on 2014-09-10]**

EP 2 659 137 B1

**Beschreibung**

Die Erfindung betrifft ein Verfahren zum Betreiben eines Windparks, sowie einen Windpark.

In Windparks speisen mehrere Windenergieanlagen die von ihnen erzeugte Leistung in ein windparkinternes Netz ein. Die in windparkinternem Netz eingespeiste Leistung wird an einer Übergabestation - ggf. nach Transformation - in ein Versorgungsnetz eingespeist. Damit die Qualität der Stromversorgung im Versorgungsnetz aufrechterhalten werden kann, muss die vom Windpark in das Versorgungsnetz eingespeiste Leistung gewisse Vorgaben erfüllen, bspw. im Hinblick auf den Leistungsfaktor, d.h. dem Verhältnis zwischen Wirk- und Blindleistung. Dies wird überwacht von einer "Parkmaster" genannten Parkregelungseinrichtung, die so auf einzelne Steuereinrichtungen der Windenergieanlagen einwirken kann, dass die Summe der von den Windenergieanlagen erzeugten Leistung die aus dem Versorgungsnetz resultierenden Vorgaben erfüllt.

Die in einem Windpark erzeugte Wirkleistung kann vom Parkmaster nicht frei bestimmt werden, sondern ist abhängig von der Windgeschwindigkeit und der Auslegungsleistung der einzelnen Windenergieanlagen. Über den Parkmaster kann jedoch die von dem Windpark erzeugte Blindleistung bestimmt werden.

In den Leitungen des windparkinternen Netzes kommt es zu Leistungsverlusten. Um sie zu reduzieren, kann die Blindleistung variiert werden. Dazu sind im Stand der Technik - zum Teil gegenläufige - Maßnahmen bekannt.

So können bspw. bei Stillstand der Windenergieanlagen und dennoch vorhandener Blindleistungsanforderung anstelle der mit Betriebsverlusten behafteten Umrichter der Windenergieanlagen passive Komponenten eingesetzt werden, mit denen die Blindleistungsanforderungen erfüllt werden können.

Weiterhin kann bei hoher Leistung der Windenergieanlagen an der Übergabestation eine möglichst hohe Spannung im windparkinternen Netz gewählt werden. Dadurch kommt es zu einer Reduktion der Verluste in den Kabeln des windparkinternen Netzes. Dies ist besonders bei hoher Leistung der Windenergieanlagen sinnvoll, da in diesem Fall die Kabelverluste dominieren. Im Gegensatz dazu sollte bei niedriger Leistung der Windenergieanlagen eine möglichst niedrige Spannung im windparkinternen Netz gewählt werden, da in einem solchen Fall Transformatorverluste dominieren. Diese können durch eine niedrige Spannung im windparkinternen Netz reduziert werden. Verfahren, nach denen die Spannung im windparkinternen Netz in Abhängigkeit von Leistung der Windenergieanlagen verändert wird sind z.B. in DE 10 2008 048 258 A1, EP1643609 A2 und DE 10 2007 044601 A1 schrieben.

Weiterhin ist es möglich, die Strecke, durch welche die Leistung im windparkinternen Netz transportiert werden muss, zu minimieren. Dadurch wird erreicht, dass die Blindleistung über eine möglichst kurze Strecke transportiert werden muss und somit die Kabelverluste reduziert werden können. Die Möglichkeiten, die Verluste im windparkinternen Netz so zu reduzieren, sind jedoch begrenzt.

Die europäische Patentanmeldung EP 2 108 828 A2 beschreibt ein Verfahren zum Betreiben eines Windparks, bei dem eine Parkregelungsvorrichtung so ausgelegt ist, dass die für die Erfüllung der Anforderungen des Versorgungsnetzes erforderliche Blindleistung hauptsächlich bei den Windenergieanlagen erzeugt werden, die nahe am Verknüpfungspunkt sind, während die weiter entfernten Windenergieanlagen einen geringeren Beitrag zur Blindleistungserzeugung leisten. Dadurch wird sichergestellt, dass hohe Blindleistungsanteile nur über eine kurze Strecke zwischen Windenergieanlage und Verknüpfungspunkt, über einen längeren Transportweg nur kleinere Blindleistungsanteile im windparkinternen Netz transportiert werden müssen. In der Summe ergibt sich eine Verringerung der Verluste aufgrund von Blindleistungstransport im windparkinternen Netz. Gemäß diesem Stand der Technik übermittelt die Parkregelungsvorrichtung an jeder Windenergieanlage einzelne Sollwerte für Wirk- und Blindleistung. Die Parkregelungsvorrichtung muss daher so ausgelegt sein, um ein komplexes Gleichungssystem lösen zu können. Das Lösen des Gleichungssystems nimmt einige Zeit in Anspruch, so dass sich die Anpassung der Wirk- und Blindleistungserzeugung im Windpark bei Änderungen im Versorgungsnetz verzögert. Während dieser Verzögerung kann nicht gewährleistet werden, dass die von dem Windpark in das Versorgungsnetz eingespeiste Leistung den Anforderungen des Versorgungsnetzes entspricht.

Die Aufgabe der vorliegenden Erfindung ist es, ein Verfahren zum Betreiben eines Windparks sowie einen Windpark zu schaffen, bei dem die Verluste im windparkinternen Netz aufgrund von Blindleistung reduziert werden und die Wirk- und Blindleistung des Windparks schnell angepasst werden kann.

Diese Aufgabe wird gelöst durch das Verfahren zum Betreiben eines Windparks gemäß dem Hauptanspruch, sowie einen Windpark gemäß dem nebengeordneten Anspruch. Vorteilhafte Weiterbildungen ergeben sich aus den abhängigen Ansprüchen.

Demnach betrifft die Erfindung ein Verfahren zum Betreiben eines Windparks mit mehreren, an ein windparkinternes Netz angeschlossen Windenergieanlagen mit jeweils einer Steuerungseinheit, einer Übergabestation, an der in dem Windpark erzeugte elektrische Leistung von dem windparkinternen Netz an ein Versorgungsnetz übergeben wird, und einen mit den Steuerungseinheiten der einzelnen Windenergieanlagen verbundenen Parkmaster, wobei der Parkmaster einen einheitlichen Spannungssollwert (Usoll) ermittelt und den Spannungssollwert (Usoll) an die Steuerungseinheiten der einzelnen Windenergieanlagen übermittelt, und die von einer Windenergieanlage erzeugte Blindleistung durch die Steuerungseinheit der Windenergieanlage über einen Gesamtfaktor (Ib) eingestellt wird, wobei der Gesamtfaktor (Ib) einen ersten Faktor (Ib1) umfasst, der aus der Differenz zwischen der an der Windenergieanlage anliegenden Ist-Spannung (Uist) und dem Spannungssollwert (Usoll), multipliziert mit einem Verstärkungsfaktor (k Ib), errechnet wird.

Die Erfindung betrifft weiterhin einen Windpark mit mehreren, an ein windparkinternes Netz angeschlossenen Windenergieanlagen mit jeweils einer Steuerungseinheit, einer Übergabestation, an der die in dem Windpark erzeugte elektrische Leistung von dem windparkinternen Netz an ein Versorgungsnetz übergeben wird, und einem mit den Steuerungseinheiten der Windenergieanlagen verbundenenen Parkmaster, wobei der Parkmaster dazu ausgebildet ist, einen einheitlichen Spannungssollwert (Usoll) zu ermitteln und der Spannungssollwert (Usoll) an die Steuerungseinheiten der einzelnen Windenergieanlagen zu übermitteln, und die von einer Windenergieanlage erzeugte Blindleistung durch die Steuerungseinheit der Windenergieanlage über einen Gesamtfaktor (Ib) einstellbar ist, wobei der Gesamtfaktor (Ib) einen ersten Faktor (Ib1) umfasst, der aus der Differenz zwischen der an der Windenergieanlage anliegenden Ist-Spannung (Uist) und dem Spannungssollwert (Usoll), multipliziert mit einem Verstärkungsfaktor (k_Ib), errechenbar ist.

Der Erfindung liegt die Erkenntnis zugrunde, dass sich bei einer Blindleistungsregelung anhand von einer Sollspannung aufgrund von Impedanzen im windparkinternen Netz eine Optimierung der Blindleistungsverteilung im Windpark ergibt. Die Windenergieanlagen erhalten dabei einen einheitlichen Wert für die Sollspannung, so dass es einer aufwändigen Berechnung individueller Sollwerte nicht erforderlich ist. Es ist somit eine verzögerungsfreie Blindleistungsregelung möglich.

Soll bspw. eine kapazitive (übererregte) Einspeisung von Blindleistung erfolgen, so wird der Spannungssollwert durch den Parkmaster etwas höher gewählt als der an der Übergabestation gemessene Wert der Spannung. Dieser ermittelte Wert wird an die Steuerungseinheiten der Windenergieanlagen übermittelt. Dort wird aus der Differenz von der jeweils an der Windenergieanlage anliegenden Ist-Spannung Uist und dem Spannungssollwert Usoll, multipliziert mit einem Verstärkungsfaktor kIb der Faktor Ib1 errechnet:

$$Ib_1 = (U_{ist} - U_{soll}) \times k_{Ib}$$

Der Faktor Ib1 fließt in den Gesamtfaktor Ib, wobei im einfachsten Fall gilt:

$$Ib = Ib_1$$

Auf Basis des Gesamtfaktor Ib kann die Steuerungseinheit die Blindleistungserzeugung der Windenergieanlage anpassen, wobei ein höherer Gesamtfaktor Ib eine höhere Blindleistungserzeugung zur Folge hat.

Infolge der Impedanz im windparkinternen Netz stellen sich an den einzelnen Windenergieanlagen unterschiedliche Ist-Spannungen ein. Dabei sind die Spannungen bei Windenergieanlagen nahe der Übergabestation geringer als bei weiter von der Übergabestation entfernt liegenden Windenergieanlagen. Indem an jeder Windenenergieanlage die Differenz aus dem einheitlichen Sollspannungswert und den jeweiligen Ist-Spannungen der Blindleistungserzeugung zugrunde gelegt wird, wird erreicht, dass die Windenergieanlagen nahe der Übergabestation mehr Blindleistung in das windparkinterne Netz einspeisen als die weiter von der Übergabestation entfernten Windenergieanlagen.

Indem die Windenergieanlagen, die näher an der Übergabestation angeordnet sind, erfindungsgemäß einen höheren Blindleistungsanteil in das windparkinterne Netz einspeisen als weiter von der Übergabestation entferne Windenergieanlagen, muss der höhere Blindleistungsanteil nur über eine kürzere Distanz in dem windparkinternen Netz transportiert werden. Die Transportverluste gegenüber einem Windpark, bei dem die Blindleistungserzeugung gleichmäßig auf alle Windenergieanlagen verteilt ist, werden dadurch gesenkt. Bei der Erfindung ist - anders als im Stand der Technik - kein aufwändiger Parkmaster nötig, der zum Zwecke der Berechnung von Blindleistungssollwerten für jede einzelne Windenergieanlage notwendig ist. Vielmehr reicht es erfindungsgemäß aus, lediglich einen Blindleistungssollwert in Form eines einheitlichen Spannungssollwertes zu bestimmen, der an alle Windenergieanlagen übermittelt wird. Die Blindleistungsregelung erfolgt damit praktisch verzögerungsfrei. Durch die erfindungsgemäße Ausnutzung von Effekten im windparkinternen Netz wird eine verlustoptimierte Verteilung der Blindleistungserzeugung auf die einzelnen Windenergieanlagen im Windpark erreicht.

Soll ein zu schnelles Nachregeln bei Änderungen im Versorgungsnetz vermieden werden, kann neben dem Faktor Ib1 noch ein weitere Faktor Ib2 in den Gesamtfaktor Ib einfließen. Die Faktoren Ib1 und Ib2 können bevorzugt zum Gesamtfaktor Ib aufaddiert werden:

$$Ib = Ib_1 + Ib_2$$

Während der Faktor Ib1 wie oben ermittelt werden kann, kann der Faktor Ib2 vorzugsweise aus der Differenz zwischen der über einen festgelegten Zeitraum gemittelten, an der Windenergieanlage anliegenden Ist-Spannung Uist;gemittelt und dem Spannungssollwert Usoll, multipliziert mit einem Verstärkungsfaktor kIb errechnet wird:

$$Ib_2 = (U_{ist;gemittelt} - U_{soll}) \times k_{Ib}$$

Durch diesen Faktor Ib2 lässt sich sicherstellen, dass bei einem Netzfehler o.ä. ein Anteil der Blindstromerzeugung unverzögert an die neuen Gegebenheiten angepasst wird (über den Faktor Ib1), während ein weiterer Anteil (über den Faktor Ib2) erst mit einer gewissen Verzögerung angepasst wird. Dadurch kann eine unnötige Schwingungsanregung im windparkinternen Netz und/oder Versorgungsnetz vermieden werden.

Alternativ ist es möglich nicht die an der Windenergieanlage anliegenden Ist-Spannung Uist, sondern die Differenz zwischen Ist-Spannung Uist und Spannungssollwert Usoll für die Ermittlung des Faktors Ib2 heranzuziehen. Der Faktor Ib2 wird in einem solchen Fall also aus der über einen festgelegten Zeitraum gemittelten Differenz zwischen der an der Windenergieanlage anliegenden Ist-Spannung Uist und dem Spannungssollwert Usoll, multipliziert mit einem Verstärkungsfaktor kIb errechnet:

$$Ib_2 = (U_{ist} - U_{soll})_{gemittelt} \times k_{Ib}$$

Alternativ ist es möglich, einen zeitlichen Mittelwert der Sollspannung Usoll für die Gewinnung des Faktors Ib2 heranzuziehen. Der Faktor Ib2 wird in einem solchen Fall also aus der Differenz zwischen der an der Windenergieanlage anliegenden Ist-Spannung Uist und dem über einen festgelegten Zeitraum gemittelten Spannungssollwert Usoll, multipliziert mit einem Verstärkungsfaktor kIb errechnet:

$$Ib_2 = (U_{ist} - U_{soll;gemittelt}) \times k_{Ib}$$

Es ist auch möglich, dass der Faktor Ib2 aus einer zeitlichen Mittelung des Faktors Ib1 berechnet wird:

$$Ib_2 = Ib_{1;gemittelt}$$

Es ist bevorzugt, wenn sich der Verstärkungsfaktor kIb aus einem globalen Verstärkungsfaktor kIb;global und einem für jede Windenergieanlage individuell vorgebbaren Verstärkungsfaktor kIb;WEA bestimmt:

$$kIb = k_{Ib;global} + k_{Ib;WEA}$$

Über den individuellen Faktor kIb;WEA können bei der Blindleistungserzeugung auf Eigenarten der einzelnen Windenergieanlagen und/oder die Topographie des Windparks berücksichtigt werden. Der Faktor kIb;WEA kann dabei manuell in der Steuerungseinheit jeder Windenergieanlage abgelegt werden. Es ist aber auch möglich, dass der Parkmaster den Faktor kIb;WEA für jede Windenergieanlage ermittelt und dann den einzelnen Steuerungseinheiten übermittelt. Da es sich bei dem Faktor kIb;WEA jedoch um keinen Wert handelt, der in Echtzeit berechnet werden müsste, muss der Parkmaster über keine ungewöhnlich hohen Rechenkapazitäten verfügen.

Alternativ oder zusätzlich ist es möglich, dass durch die Steuerungseinheit dem globalen Spannungssollwert Usoll ein Anpassungsfaktor deltaUsoll;WEA hinzuaddiert wird, wobei der so errechnete angepasste Spannungssollwert Usoll' bei der Berechnung der der Faktoren kIb1 und kIb2 anstelle des Sollwertes Usoll zugrunde gelegt wird. Der angepasste Spannungssollwert Usoll' errechnet sich dabei wie folgt:

$$U'_{soll} = U_{soll} + \Delta U_{soll;WEA}$$

Der Anpassungsfaktor deltaUsoll;WEA kann dabei von dem Parkmaster bestimmt werden. Da es sich hierbei jedoch um keinen Wert handelt, der in Echtzeit berechnet werden müsste, muss der Parkmaster über keine ungewöhnlich hohen Rechenkapazitäten verfügen.

Es ist bevorzugt, wenn mehrere Windenergieanlagen des Windparks zu Gruppen zusammengeschlossen sind, wobei die Windenergieanlagen einer Gruppe mit identischen Werten für kIb;WEA und/oder deltaUsoll;WEA betrieben werden. Dadurch kann der Rechenaufwand für die Berechnung der vorgenannten Faktoren verringert werden.

Der erfindungsgemäße Windpark ist zur Durchführung des erfindungsgemäßen Verfahrens ausgebildet. Zur Erläuterung des Windparks wird auf die vorstehenden Ausführungen zum erfindungsgemäßen Verfahren verwiesen.

Die Erfindung wird nun anhand vorteilhafter Ausführungsformen unter Bezugnahme auf die Zeichnungen beispielhaft beschrieben. Es zeigen:

Figur 1: ein Ausführungsbeispiel eines erfindungsgemäßen Windparks; und

Figuren 2a-e: Teildarstellungen einer Steuerungseinheit für Windenergieanlagen.

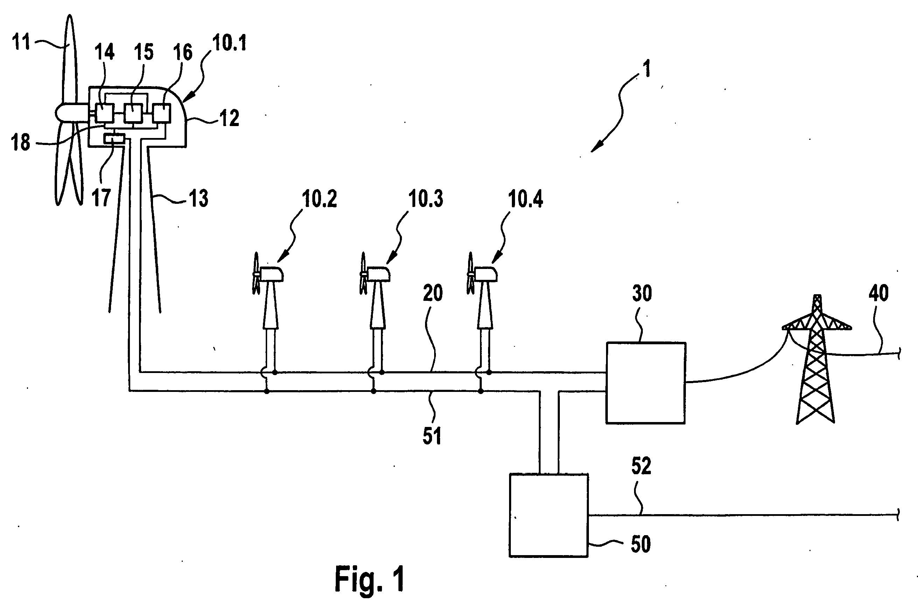

In Figur 1 ist ein erfindungsgemäßer Windpark 1 dargestellt, der mit dem erfindungsgemäßen Verfahren betrieben wird.

Der Windpark 1 umfasst dabei mehrere Windenergieanlagen 10.1-10.4, von denen exemplarisch die Windenergieanlage 10.1 detaillierter dargestellt ist. Eine Windenergieanlage 10 umfasst einen Rotor 11, der drehbar an einer Gondel 12 an der Spitze eines Turms 13 angeordnet ist. Der Rotor 11 treibt einen Generator 14 an, bei dem es sich um einen doppelt gespeisten Asynchrongenerator mit Stator und Rotor handeln kann. Mit dem Rotor des Generators 14 ist ein Umrichter 15 verbunden. Weiterhin ist ein Transformator 16 vorgesehen, der die vom Umrichter 15 und dem Stator des Generators 14 ausgegebene Spannung transformiert. Der Betrieb der Windenergieanlage 10 ist kontrolliert von einer Steuereinrichtung 17. Sie wirkt über Steuerleitungen 18 auf die einzelnen Komponenten der Windenergieanlage 10 ein. Neben den dargestellten Komponenten kann die Windenergieanlage 10 selbstverständlich noch weitere Komponenten, wie ein Pitchverstellsystem für die Rotorblätter oder Stellmotoren, mit denen die Gondel 12 gegenüber den Turm 13 verschwenkt werden kann.

Die Windenergieanlage 10 ist so mit einem windparkinternen Netz 20 verbunden, dass die von der Windenergieanlage 10 erzeugte Leistung in das windparkinterne Netz 20 eingespeist wird. Ebenfalls an das windparkinterne Netz 20 angeschlossen ist eine Übergabestation 30. An dieser Übergabestation 30 wird die von den Windenergieanlagen 10 erzeugte elektrische Leistung aus dem windparkinternen Netz 20 in ein externes Versorgungsnetz 40 übergeben. Bei dem windparkinternen Netz 20 handelt es sich um ein Mittelspannungsnetz, während das Versorgungsnetz 40 ein Hochspannungsnetz sein kann. Um die Leistung von dem windparkinternen Netz in das Versorgungsnetz einspeisen zu können, umfasst die Übergabestation 40 einen Transformator (nicht dargestellt).

Ebenfalls vorgesehen ist ein Parkmaster 50, der über Steuerleitungen 51 mit der trbergabestation 30 und den Steuerungseinheiten 17 der einzelnen Windenergieanlagen 10 verbunden ist.

Damit die von den Windenergieanlagen 10 erzeugte elektrische Leistung in das Versorgungsnetz 40 eingespeist werden kann, muss sie gewisse Anforderungen erfüllen. Eine dieser Anforderungen besteht insbesondere hinsichtlich des Leistungsfaktors, d. h. dem Verhältnis zwischen Wirk- und Blindleistung. Während die Wirkleistung praktisch allein von dem Wind, der die Rotoren 11 der Windenergieanlagen 10 in Bewegung versetzt, abhängt, kann die erzeugte Blindleistung aktiv geregelt werden, so dass der gewünschte Leistungsfaktor eingehalten wird. In einem Windpark muss nicht jede Windenergieanlage 10 diese Voraussetzungen erfüllen, es ist vielmehr ausreichend, wenn an der Übergabestation 30 die Leistung aus dem windparkinternen Netz 20 so vorliegt, dass sie den Anforderungen des Versorgungsnetzes 40 entspricht.

Der Parkmaster 50 ist dazu ausgebildet, Sollwerte für die Blindleistung zu ermitteln, so dass an der Übergabestation 30 die gewünschte Blindleistung vorliegt. Die Sollwerte für die Blindleistung können anhand von an der Übergabestation 30 gewonnenen Informationen über das Versorgungsnetz 40 ermittelt werden. Hierbei kann es sich insbesondere um die komplexe Leistung oder die Spannung im Versorgungsnetz 40 handeln. Die an der Übergabestation 30 gewonnenen Werte werden über die Steuerleitungen 51 an den Parkmaster 50 übermittelt, und dort der Ermittlung der Sollwerte für die Blindleistung zugrunde gelegt. Bei der Ermittlung der Sollwerte für die Blindleistung können zusätzlich auch über eine externe Datenleitung 52 empfangene Sollwerte Berücksichtigung finden. Der Betreiber des Versorgungsnetzes 40 kann so eine vom Windpark 1 zu erzeugende Blindleistung vorgeben.

Die Sollwerte für die Blindleistung werden von dem Parkmaster 50 in einen einheitlichen Spannungssollwertes Usoll umgerechnet und über die Steuerleitungen 51 an die Steuereinrichtungen 17 der einzelnen Windenergieanlagen 10 übermittelt. Die Steuerungseinrichtungen 17 sind dabei so ausgebildet, den empfangenen Spannungssollwert Usoll bei der Steuerung der Windenergieanlage in Bezug auf die Blindleistungserzeugung zu berücksichtigen. Indem die Windenergieanlagen gemäß dem empfangenen Spannungssollwert Usoll neben der Wirkleistung auch Blindleistung in das windparkinterne Netz 20 einspeisen, wird sichergestellt, dass an der Übergabestation 30 die gewünschte Blindleistung vorliegt.

Jede Steuerungseinheit 17 einer Windenergieanlage 10 ist so ausgebildet, dass sie aus dem einheitlichen Spannungssollwert Usoll und der an der Windenergieanlage 10 anliegenden Ist-Spannung Uist des windparkinternen Netzes 20 ein Gesamtfaktor Ib ermittelt, welcher der Blindleistungserzeugung der Windenergieanlage 10 zugrunde gelegt wird.

In dem windparkinternen Netz 20 ergibt sich auf Grund von Impedanz eine ungleiche Spannungsverteilung. So ist die Spannung im windparkinternen Netz bei der weit von der Übergabestation 30 entfernten Windenergieanlage 10.1 höher als bei der nahe an der Übergabestation 30 gelegenen Windenergieanlage 10.4. Indem neben der Sollspannung für die Ermittlung des Gesamtfaktors Ib auch die Ist-Spannung im windparkinternen Netz 20 berücksichtigt wird, kann sichergestellt werden, dass von der weit von der Übergabestation 30 entfernten Windenergieanlage 10.1 weniger Blindleistung in das windparkinterne Netz eingespeist wird als von der nahe an der Übergabestation 30 gelegenen Windenergieanlage 10.4. Indem ein höherer Anteil an Blindleistung nur über eine kurze Distanz zur Übergabestation 30 transportiert werden muss, während ein kleinerer Anteil über eine längere Distanz transportiert werden muss, ergibt sich ein geringerer Verlust gegenüber einem Windpark, bei dem die Blindleistung von allen Windenergieanlagen gleichmäßig erzeugt wird.

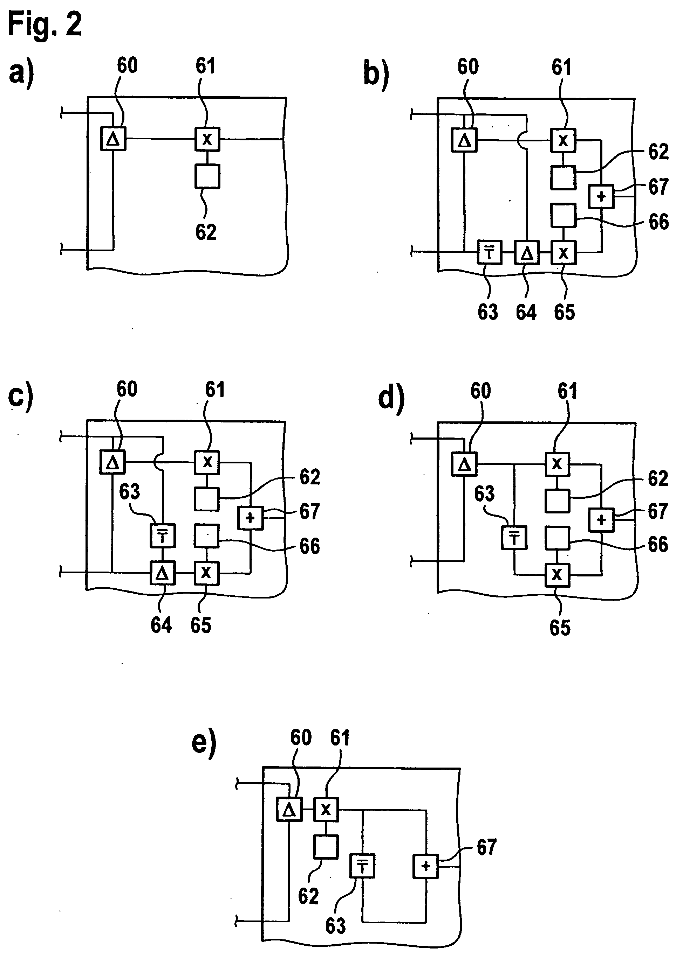

In Figuren 2a-e sind verschiedene Möglichkeiten zur Ermittlung des Gesamtfaktors Ib durch eine Steuerungseinheit 17 schematisch dargestellt. Von der Steuerungseinheit 17 ist in den Figuren 2a-e nur der für die Erfindung relevante Teil zur Ermittlung des Gesamtfaktors Ib dargestellt. Die Umsetzung des Gesamtfaktors Ib in Steuersignale für die Komponenten 11-16 der Windenergieanlage 10, so dass die gewünschte Blindleistungserzeugung erfolgt, ist nicht dargestellt. In allen Beispielen werden der Steuerungseinheit 17 der von dem Parkmaster 50 ermittelte Spannungssollwert Usoll, sowie die an der Windenergieanlage 10 anliegende Ist-Spannung Uist als Eingangsgrößen zugeführt. Ausgangsgröße ist in allen Beispielen gemäß Figuren 2a-e der Gesamtfaktor Ib.

In Figur 2a wird in der Steuerungseinheit 17 durch ein Differenzmodul 60 die Differenz aus den Eingangsgrößen Spannungssollwert Usoll und Ist-Spannung Uist gebildet und anschließend durch ein Multiplikationsmodul 61 mit einem in einem Speichermodul 62 hinterlegten Faktor kIb multipliziert. Nach der Multiplikation liegt der Faktor Ib1 vor, der gleich ist mit dem Gesamtfaktor Ib als Ausgangsgröße.

Die Steuerungseinheit 17 gemäß Figur 2b umfasst wie die Steuerungseinheit 17 gemäß Figur 2a ein Differenzmodul 60, welches die Differenz aus den Eingangsgrößen Spannungssollwert Usoll und Ist-Spannung Uist bildet, und ein dahinter geschaltetes Multiplikationsmodul 61 zur Multiplikation des Ergebnisses des Differenzmoduls 60 mit einem in einem Speichermodul 62 hinterlegten Faktor kIb. Nach dieser Multiplikation liegt der Faktor Ib1 vor. Daneben umfasst die Steuerungseinheit 17 noch ein Mittelungsmodul 63, mit dem ein zeitliches Mittel einer Eingangsgröße gebildet werden kann. Im dargestellten Ausführungsbeispiel wird mit dem Mittelungsmodul 63 die Ist-Spannung Uist zu einem Wert Uist;gemittelt über die Zeit gemittelt. Anschließend wird über ein weiteres Differenzmodul 64 die Differenz zwischen dem Spannungssollwert Usoll und der gemittelten Ist-Spannung U-ist;gemittelt gebildet, die anschließend durch ein weiteres Multiplikationsmodul 65 mit einem in einem Speichermodul 66 hinterlegten Faktor kIb2 multipliziert wird. Als Ergebnis liegt dann der Faktor Ib2 vor. Die Faktoren Ib1 und Ib2 werden dann durch das Additionsmodul 67 zu dem Gesamtfaktor Ib addiert.

Eine nach Figur 2b ausgebildete Steuerungseinheit 17 bietet des Vorteil, dass bei einem Netzfehler o. ä. ein Anteil der Blindstromerzeugung weiterhin unverzögert an die neuen Gegebenheiten angepasst wird (über den Faktor Ib1), während ein weiterer Anteil (über den Faktor Ib2) erst mit einer gewissen Verzögerung angepasst wird. Dadurch kann eine unnötige Schwingungsanregung im windparkinternen Netz und/oder Versorgungsnetz vermieden werden.

Alternativ ist es möglich, dass zur Ermittlung des Faktors Ib2 der Sollspannungswert Usoll zu einem Wert Usoll;gemittelt über die Zeit gemittelt wird. Eine entsprechend ausgebildete Steuerungseinheit 17 ist in Figur 2c dargestellt. Bei dem Ansonsten zu Figur 2b identischen Ausführungsbeispiel gemäß Figur 2c wird das Mittelungsmodul 63 zur Bildung des Wertes Usoll;gemittelt verwendet.

Alternativ ist es möglich, dass zur Ermittlung des Faktors Ib2 die Differenz aus Sollspannungswert Usoll und Ist-Spannung Uist über die Zeit gemittelt wird, bevor sie über durch das Multiplikationsmodul 65 mit dem Faktor kIb2 zum Faktor Ib2 multipliziert wird. Eine entsprechend ausgebildete Steuerungseinheit ist in Figur 2d dargestellt.

Alternativ ist es möglich, dass der Faktor Ib2 den über die Zeit gemittelten Faktor Ib1 darstellt. Eine dazu entsprechen ausgebildete Steuerungseinheit 17 ist in Figur 2e dargestellt. Der Faktor Ib1 wird durch das Mittelungsmodul 63 über die Zeit zum Faktor Ib2 gemittelt. Anschließend werden die Faktoren Ib1 und Ib2 durch das Additionsmodul 67 zum Gesamtfaktor Ib aufaddiert.

Die Faktoren kIb1 und kIb2 können fest vorgegeben und in Speichermodulen 62, 66 in der Steuerungseinheit 17 abgelegt sein. Es ist jedoch auch möglich, dass diese Faktoren kIb1 und kIb2 von dem Parkmaster ermittelt und den Windenergieanlagen übermittelt werden. Da es sich bei diesen Faktoren um keine Werte handelt, die in Echtzeit berechnet werden müssten (wie bspw. die Blindleistungssollwerte im Stand der Technik), muss der Parkmaster über keine außergewöhnlich hohe Rechenleistung verfügen.

Die Faktoren kIb1 und kIb2 können für jede Windenergieanlage separat bestimmt werden. Es ist auch möglich, mehrere Windenergieanlagen zu einer oder mehreren Gruppen zusammenzufassen und die Faktoren kIb1 und kIb2 für die Windenergieanlagen dieser Gruppe zu bestimmen. Die Windenergieanlagen einer Gruppe arbeiten dann mit identischen Faktoren kIb1 und kIb2. Es ist bevorzugt, wenn sich die Faktoren kIb1 und kIb2 für jede Windenergieanlage oder Gruppe von Windenergieanlagen aus globalen Faktoren kIb1;gobal und kIb2;global, sowie individuellen Faktoren kIb1;WEA und kIb2;WEA zusammengesetzt sind. Es ist aber auch möglich, dass alle Windenergieanlagen im Windpark mit den gleichen Faktoren kIb1 und kIb2 betrieben werden.

Alternativ oder zusätzlich ist es möglich, dass der von dem Parkmaster 50 als Eingangsgröße erhaltene Sollspannungswert Usoll durch die Steuerungseinheit 17 über einen Wert deltaUsoll;WEA individuell angepasst wird. Der Wert deltaUsoll;WEA kann dabei bspw. zu dem empfangenen Sollspannungswert Usoll hinzuaddiert werden.

Alternativ kann auch vorgesehen sein einen gemischten Regler zu verwenden indem der Parkmaster 50 den Steuerungseinheiten 17 der Windenergieanlagen 10 zusätzlich zum Sollspannungswert Usoll noch einen absoluten oder relativen Blindleistungssollwert übermittelt. Die Steuerungseinheiten 17 der Windenergieanlagen 10 können dann anhand des Blindleistungssollwertes einen Blindstrom ermitteln, der zusätzlich noch mit der Abweichung der Ist-Spannung von dem Sollspannungswert Usoll multipliziert mit einem Faktor kIb1 modifiziert wird. Es handelt sich dann um eine gemischte Blindleistungs-Spannungsregelung.

## Patentansprüche

1. Verfahren zum Betreiben eines Windparks (1) mit mehreren, an ein windparkinternes Netz (20) angeschlossen Windenergieanlagen (10) mit jeweils einer Steuerungseinheit (17), einer Übergabestation (30), an der in dem Windpark (1) erzeugte elektrische Leistung von dem windparkinternen Netz (20) an ein Versorgungsnetz (40) übergeben wird, und einem mit den Steuerungseinheiten (17) der einzelnen Windenergieanlagen (10) verbundenen Parkmaster (50), **dadurch gekennzeichnet, dass** der Parkmaster (50) einen einheitlichen Spannungssollwert (Usoll) ermittelt und den Spannungssollwert (Usoll) an die Steuerungseinheiten (17) der einzelnen Windenergieanlagen (10) übermittelt, und die von einer Windenergieanlage (10) erzeugte Blindleistung durch die Steuerungseinheit (17) der Windenergieanlage (10) über einen Gesamtfaktor (Ib) eingestellt wird, wobei der Gesamtfaktor (Ib) einen ersten Faktor (Ib1) umfasst, der aus der Differenz zwischen der an der Windenergieanlage (10) anliegenden Ist-Spannung (Uist) und dem Spannungssollwert (Usoll), multipliziert mit einem Verstärkungsfaktor (kIb), errechnet wird.

2. Verfahren nach Anspruch 1, **dadurch gekennzeichnet, dass** der Gesamtfaktor (Ib) noch ein weiteren, zum ersten Faktor (Ib1) hinzuzuaddierenden Faktor (Ib2) umfasst, wobei der Faktor (Ib2) aus der Differenz zwischen einer über einen festgelegten Zeitraum gemittelten, an der Windenergieanlage (10) anliegenden Ist-Spannung (Uist;gemittelt) und dem Spannungssollwert (Usoll), multipliziert mit einem Verstärkungsfaktor (kIb), errechnet wird.

3. Verfahren nach Anspruch 1, **dadurch gekennzeichnet, dass** der Gesamtfaktor (Ib) noch ein weiteren, zum ersten Faktor (Ibl) hinzuzuaddierenden Faktor (Ib2) umfasst, wobei der Faktor (Ib2) aus der über einen festgelegten Zeitraum gemittelten Differenz zwischen der an der Windenergieanlage (10) anliegenden Ist-Spannung (Uist) und dem Spannungssollwert (Usoll), multipliziert mit einem Verstärkungsfaktor (kIb), errechnet wird.

4. Verfahren nach Anspruch 1, **dadurch gekennzeichnet, dass** der Gesamtfaktor (Ib) noch ein weiteren, zum ersten Faktor (Ib1) hinzuzuaddierenden Faktor (Ib2) umfasst, wobei der Faktor (Ib2) aus der Differenz zwischen der an der Windenergieanlage anliegenden Ist-Spannung (Uist) und der über einen festgelegten Zeitraum gemittelten Spannungssollwert (Usoll;gemittelt), multipliziert mit einem Verstärkungsfaktor (kIb), errechnet wird.

5. Verfahren nach einem der Ansprüche 1 bis 4, **dadurch gekennzeichnet, dass** sich der Verstärkungsfaktor (kIb) aus einem globalen Verstärkungsfaktor (kIb;global) und einem für jede Windenergieanlage (10) individuellen Verstärkungsfaktor (kIb;WEA) zusammensetzt.

6. Verfahren nach Anspruch 5, **dadurch gekennzeichnet, dass**

der globale Verstärkungsfaktor (k_Ib;global) und/oder die individuellen Verstärkungsfaktoren (k_Ib;WEA) durch den Parkmaster (50) bestimmt und an die Steuerungseinheiten (17) der einzelnen Windenergieanlagen (10) übermittelt wird.

7. Verfahren nach einem der Ansprüche 1 bis 6, **dadurch gekennzeichnet, dass** die Differenz zwischen der an der Windenergieanlage (10) anliegenden Ist-Spannung (Uist) oder über einen festgelegten Zeitraum gemittelten, an der Windenergieanlage vorliegenden Ist-Spannung (Uist;gemittelt) und dem Spannungssollwert (Usoll) durch einen Sollspannungskorrekturfaktor (deltaUsoll;WEA) verringert wird, wobei für jede Windenergieanlage ein individueller Sollspannungskorrekturfaktor (deltaUsoll;WEA) vorgesehen ist.

8. Verfahren nach Anspruch 7, **dadurch gekennzeichnet, dass** der Sollspannungskorrekturfaktor (deltaUsoll;WEA) durch den Parkmaster (50) bestimmt und an die Steuerungseinheiten (17) der einzelnen Windenergieanlagen (10) übermittelt wird.

9. Verfahren nach einem der Ansprüche 5 bis 8, **dadurch gekennzeichnet, dass** wenigstens zwei Windenergieanlagen (10) zu einer Gruppe zusammengefasst sind, wobei den Steuerungseinheiten (17) der Windenergieanlagen (10) einer Gruppe mit gemeinsamem individueller Verstärkungsfaktor (k_Ib;WEA) und/oder Sollspannungskorrekturfaktor (deltaUsoll;WEA) betrieben werden.

10. Windpark (1) mit mehreren, an ein windparkinternes Netz (20) angeschlossenen Windenergieanlagen (10) mit jeweils einer Steuerungseinheit (17), einer Übergabestation (30), an der die in dem Windpark (1) erzeugte elektrische Leistung von dem windparkinternen Netz (20) an eine Versorgungsnetz (40) übergeben wird, und einem mit den Steuerungseinheiten (17) der Windenergieanlagen (10) verbunden Parkmaster (50), **dadurch gekennzeichnet, dass** der Parkmaster (50) dazu ausgebildet ist, einen einheitlichen Spannungssollwert (Usoll) zu ermitteln und den Spannungssollwert (Usoll) an die Steuerungseinheiten (17) der einzelnen Windenergieanlagen (10) zu übermitteln, und die von einer Windenergieanlage (10) erzeugte Blindleistung durch die Steuerungseinheit (17) der Windenergieanlage (10) über einen Gesamtfaktor (Ib) einstellbar ist, wobei der Gesamtfaktor (Ib) einen ersten Faktor (Ib1) umfasst, der aus der Differenz zwischen der an der Windenergieanlage anliegenden Ist-Spannung (Uist) und dem Spannungssollwert (Usoll), multipliziert mit einem Verstärkungsfaktor (kIb), errechenbar ist.

11. Windpark nach Anspruch 10, **dadurch gekenn-**

**zeichnet, dass** der Gesamtfaktor (Ib) noch einen weiteren, zum ersten Faktor (Ib1) hinzuzuaddierenden Faktor (Ib2) umfasst, wobei der Faktor (Ib2) aus der Differenz zwischen einer über einen festgelegten Zeitraum gemittelten, an der Windenergieanlage anliegenden Ist-Spannung (Uist;gemittelt) und dem Spannungssollwert (Usoll), multipliziert mit einem Verstärkungsfaktor (kIb), errechenbar ist.

**12.** Windpark nach Anspruch 10, **dadurch gekennzeichnet, dass** der Gesamtfaktor (Ib) noch einen weiteren, zum ersten Faktor (Ib1) hinzuzuaddierenden Faktor (Ib2) umfasst, wobei der Faktor (Ib2) aus der über einen festgelegten Zeitraum gemittelten Differenz zwischen der an der Windenergieanlage anliegenden Ist-Spannung (Uist) und dem Spannungssollwert (Usoll), multipliziert mit einem Verstärkungsfaktor (kIb), errechenbar ist.

**13.** Windpark nach Anspruch 10, **dadurch gekennzeichnet, dass** der Gesamtfaktor (Ib) noch einen weiteren, zum ersten Faktor (Ib1) hinzuzuaddierenden Faktor (Ib2) umfasst, wobei der Faktor (Ib2) aus der Differenz zwischen der an der Windenergieanlage anliegenden Ist-Spannung (Uist) und dem über einen festgelegten Zeitraum gemittelten Spannungssollwert (Usoll), multipliziert mit einem Verstärkungsfaktor (kIb), errechenbar ist.

**14.** Windpark nach einem der Ansprüche 10 bis 13, **dadurch gekennzeichnet, dass** sich der Verstärkungsfaktor (kIb) aus einem globalen Verstärkungsfaktor (kIb;global) und einem für jede Windenergieanlage (10) individuellen Verstärkungsfaktor (kIb;WEA) zusammensetzt.

**15.** Windpark nach Anspruch 14, **dadurch gekennzeichnet, dass** der globale Verstärkungsfaktor (kIb;global) und/oder die individuellen Verstärkungsfaktoren (kIb;WEA) durch den Parkmaster (50) bestimmt und an die Steuerungseinheiten (17) der einzelnen Windenergieanlagen (10) übermittelt wird.

**16.** Windpark nach einem der Ansprüche 10 bis 15, **dadurch gekennzeichnet, dass** die Differenz zwischen der an der Windenergieanlage (10) anliegenden Ist-Spannung (Uist) oder über einen festgelegten Zeitraum gemittelten, an der Windenergieanlage (10) vorliegenden Ist-Spannung (Uist-gemittelt) und dem Spannungssollwert (Usoll) durch einen Sollspannungskorrekturfaktor (deltaU-Soll;WEA) verringert ist, wobei für jede Windenergieanlage (10) ein individueller Sollspannungskorrekturfaktor (deltaUSoll;WEA) vorgesehen ist.

**17.** Windpark nach Anspruch 16, **dadurch gekennzeichnet, dass** der Sollspannungskorrekturfaktor durch den Parkmaster (50) bestimmt und an die Steuerungseinheiten (17) der einzelnen Windenergieanlagen (10) übermittelt wird.

**18.** Windpark nach einem der Ansprüche 14 bis 17, **dadurch gekennzeichnet, dass** wenigstens zwei Windenergieanlagen (10) zu einer Gruppe zusammengefasst sind, wobei die Steuerungseinheiten (17) der Windenergieanlagen (10) einer Gruppe mit einem gemeinsamem individuellen Verstärkungsfaktor (kIb;WEA) und/oder Sollspannungskorrekturfaktor (deltaUSoll;WEA) betrieben werden.

## Claims

**1.** Method for operating a wind farm (1) having a plurality of wind energy installations (10), each having a control unit (17), which are connected to an internal wind farm network (20), a substation (30) at which electrical power that is generated on the wind farm (1) is delivered by the internal wind farm network (20) to a power supply network (40), and a farm master (50) that is connected to the control units (17) of the individual wind energy installations (10), **characterized in that** the farm master (50) determines a uniform target voltage value (Utarget) and transmits the target voltage value (Utarget) to the control units (17) of the individual wind energy installations (10), and the reactive power that is generated by a wind energy installation (10) is adjusted via the control unit (17) of the wind energy installation (10) by an overall factor (Ib), wherein the overall factor (Ib) comprises a first factor (Ib1) that is calculated from the difference between the actual voltage (Uactual) present at the wind energy installation (10) and the target voltage value (Utarget), multiplied by a gain factor (kIb).

**2.** Method according to Claim 1, **characterized in that** the overall factor (Ib) comprises another factor (Ib2) to be added to the first factor (Ib1), wherein the factor (Ib2) is calculated from the difference between an actual voltage present at the wind energy installation (10) averaged over a specified period of time (Uactual;averaged) and the target voltage value (Utarget), multiplied by a gain factor (kIb).

**3.** Method according to Claim 1, **characterized in that** the overall factor (Ib) comprises another factor (Ib2) to be added to the first factor (Ib1), wherein the factor (Ib2) is calculated from the difference averaged over a specified period of time between the actual voltage (Uactual) present at the wind energy installation (10) and the target voltage value (Utarget), multiplied by a gain factor (kIb).

**4.** Method according to Claim 1, **characterized in that** the overall factor (Ib) comprises another factor (Ib2) to be added to the first factor (Ib1), wherein the factor (Ib2) is calculated from the difference between the actual voltage (Uactual) present at the wind energy installation and the target voltage value averaged over a specified period of time (Utarget;averaged), multiplied by a gain factor (kIb).

5. Method according to one of Claims 1 to 4, **characterized in that** the gain factor (kIb) is composed of a global gain factor (kIb;global) and an individual gain factor (kIb;WEI) for each wind energy installation (10).

6. Method according to Claim 5, **characterized in that** the global gain factor (k_Ib;global) and/or the individual gain factors (k Ib;WEI) is determined by the farm master (50) and is transmitted to the control units (17) of the individual wind energy installations (10).

7. Method according to one of Claims 1 to 6, **characterized in that** the difference between the actual voltage (Uactual) present at the wind energy installation (10) or the actual voltage present at the wind energy installation averaged over a specified period of time (Uactual;averaged) and the target voltage value (Utarget) is reduced by a target voltage correction factor (deltaUtarget;WEI), wherein an individual target value correction factor (deltaUtarget;WEI) is provided for each wind energy installation.

8. Method according to Claim 7, **characterized in that** the target voltage correction factor (deltaUtarget;WEI) is determined by the farm master (50) and transmitted to the control units (17) of the individual wind energy installations (10).

9. Method according to one of Claims 5 to 8, **characterized in that** at least two wind energy installations (10) are combined into a group, wherein the control units (17) of the wind energy installations (10) in a group are operated using a shared individual gain factor (k_Ib;WEI) and/or target voltage correction factor (deltaUtarget;WEI).

10. Wind farm (1) having a plurality of wind energy installations (10), each having a control unit (17), which are connected to an internal wind farm network (20), a substation (30) at which the electrical power that is generated on the wind farm (1) is delivered by the internal wind farm network (20) to a power supply network (40), and a farm master (50) that is connected to the control units (17) of the wind energy installations (10), **characterized in that** the farm master (50) is configured to determine a uniform target voltage value (Utarget) and to transmit the target voltage value (Utarget) to the control units (17) of the individual wind energy installations (10), and the reactive power that is generated by a wind energy installation (10) can be adjusted via the control unit (17) of the wind energy installation (10) by an overall factor (Ib), wherein the overall factor (Ib) comprises a first factor (Ib1) that can be calculated from the difference between the actual voltage (Uactual) present at the wind energy installation and the target voltage value (Utarget), multiplied by a gain factor (kIb).

11. Wind farm according to Claim 10, **characterized in that** the overall factor (Ib) comprises another factor (Ib2) to be added to the first factor (Ib1), wherein the factor (Ib2) can be calculated from the difference between an actual voltage present at the wind energy installation averaged over a specified period of time (Uactual;averaged) and the target voltage value (Utarget), multiplied by a gain factor (kIb).

12. Wind farm according to Claim 10, **characterized in that** the overall factor (Ib) comprises another factor (Ib2) to be added to the first factor (Ib1), wherein the factor (Ib2) can be calculated from the difference averaged over a specified period of time between the actual voltage (Uactual) present at the wind energy installation and the target voltage value (Utarget), multiplied by a gain factor (kIb).

13. Wind farm according to Claim 10, **characterized in that** the overall factor (Ib) comprises another factor (Ib2) to be added to the first factor (Ib1), wherein the factor (Ib2) can be calculated from the difference between the actual voltage (Uactual) present at the wind energy installation and the target voltage value averaged over a specified period of time (Utarget), multiplied by a gain factor (kIb).

14. Wind farm according to one of Claims 10 to 13, **characterized in that** the gain factor (kIb) is composed of a global gain factor (kIb;global) and an individual gain factor (kIb;WEI) for each wind energy installation (10).

15. Wind farm according to Claim 14, **characterized in that** the global gain factor (kIb;global) and/or the individual gain factors (kIb;WEI) are determined by the farm master (50) and transmitted to the control units (17) of the individual wind energy installations (10).

16. Wind farm according to one of Claims 10 to 15, **characterized in that** the difference between the actual voltage (Uactual) present at the wind energy installation (10) or the actual voltage present at the wind energy installation (10) averaged over a specified period of time (Uactual-averaged) and the target voltage value (Utarget) is reduced via a target voltage correction factor (deltaUtarget;WEI), wherein an individual target voltage correction factor (deltaUtarget;WEI) is provided for each wind energy installation (10).

**17.** Wind farm according to Claim 16, **characterized in that** the target voltage correction factor is determined by the farm master (50) and transmitted to the control units (17) of the individual wind energy installations (10).

**18.** Wind farm according to one of Claims 14 to 17, **characterized in that** at least two wind energy installations (10) are combined into a group, wherein the control units (17) of the wind energy installations (10) in a group are operated using a shared individual gain factor (kIb;WEI) and/or target voltage correction factor (deltaUtarget;WEI).

## Revendications

**1.** Procédé permettant d'exploiter un parc éolien (1) comportant plusieurs éoliennes (10), raccordées à un réseau interne (20) du parc et munies chacune d'une unité de commande (17), d'une station de transfert (30), par laquelle une puissance électrique générée dans le parc éolien (1) est transmise à un réseau de distribution (40) via le réseau interne (20) du parc, et d'un maître de parc (50) relié aux unités de commande (17) des différentes éoliennes (10), **caractérisé en ce que** le maître de parc (50) calcule une valeur de consigne de la tension (Usoll) unique et transmet la valeur de consigne de la tension (Usoll) aux unités de commande (17) des différentes éoliennes (10), et la puissance réactive, générée par une éolienne (10), est réglée par l'unité de commande (17) de l'éolienne (10) par l'intermédiaire d'un facteur global (Ib), ledit facteur global (Ib) comportant un premier facteur (Ib1) qui est calculé à partir de la différence entre la tension réelle (Uist) appliquée à l'éolienne (10) et la valeur de consigne de la tension (Usoll), multipliée par un facteur d'amplification (kIb).

**2.** Procédé selon la revendication 1, **caractérisé en ce que** le facteur global (Ib) comporte encore un autre facteur (Ib2) à additionner au premier facteur (Ib1), le facteur (Ib2) étant calculé à partir de la différence entre une tension réelle (Uist;moyennée) moyennée sur une période définie et appliquée à l'éolienne (10), et la valeur de consigne de la tension (Usoll), multipliée par un facteur d'amplification (kIb).

**3.** Procédé selon la revendication 1, **caractérisé en ce que** le facteur global (Ib) comporte encore un autre facteur (Ib2) à additionner au premier facteur (Ib1), le facteur (Ib2) étant calculé à partir de la différence moyennée sur une période définie entre la tension réelle (Uist) appliquée à l'éolienne (10) et la valeur de consigne de la tension (Usoll), multipliée par un facteur d'amplification (kIb).

**4.** Procédé selon la revendication 1, **caractérisé en ce que** le facteur global (Ib) comporte encore un autre facteur (Ib2) à additionner au premier facteur (Ib1), le facteur (Ib2) étant calculé à partir de la différence entre la tension réelle (Uist) appliquée à l'éolienne (10) et la valeur de consigne de la tension (Usoll;moyennée) moyennée sur une période définie, multipliée par un facteur d'amplification (kIb).

**5.** Procédé selon l'une quelconque des revendications 1 à 4, **caractérisé en ce que** le facteur d'amplification (kIb) est composé d'un facteur d'amplification global (kIb;global) et d'un facteur d'amplification individuel (kIb;WEA) pour chaque éolienne (10).

**6.** Élément de parement selon la revendication 5, **caractérisé en ce que** le facteur d'amplification global (k_Ib;global) et/ou les facteurs d'amplification individuels (k_Ib;WEA) sont déterminés par le maître de parc (50) et sont transmis vers les unités de commande (17) des différentes éoliennes (10).

**7.** Procédé selon l'une quelconque des revendications 1 à 6, **caractérisé en ce que** la différence entre la tension réelle (Uist) appliquée à l'éolienne (10) ou la tension réelle (Uist;moyennée) moyennée sur une période définie et présente sur l'éolienne et la valeur de consigne de la tension (Usoll) est diminuée par un facteur de correction de la tension de consigne (deltaUsoll;WEA), un facteur de correction de la tension de consigne individuel (deltaUsoll;WEA) étant prévu pour chaque éolienne.

**8.** Procédé selon la revendication 7, **caractérisé en ce que** le facteur de correction de la tension de consigne (deltaUsoll;WEA) est déterminé par le maître de parc (50) et transmis aux unités de commande (17) des différentes éoliennes (10).

**9.** Procédé selon l'une quelconque des revendications 5 à 8, **caractérisé en ce qu'**au moins deux éoliennes (10) sont regroupées en un groupe, les unités de commande (17) des éoliennes (10) d'un groupe étant exploitées avec un facteur d'amplification individuel (k Ib;WEA) commun et/ou un facteur de correction de la tension de consigne individuel (deltaUsoll;WEA) commun.

**10.** Parc éolien (1) comportant plusieurs éoliennes (10), raccordées à un réseau interne (20) du parc et munies chacune d'une unité de commande (17), d'une station de transfert (30), par laquelle une puissance électrique générée dans le parc éolien (1) est transmise à un réseau de distribution (40) via le réseau interne (20) du parc, et d'un maître de parc (50) relié aux unités de commande (17) des éoliennes (10), **caractérisé en ce que** le maître de parc (50) est configuré pour calculer une valeur de consigne de la tension (Usoll) unique et pour transmettre la valeur de consigne de la tension (Usoll) aux unités de commande (17) des différentes éoliennes (10), et la puissance réactive, générée par une éolienne (10), peut être réglée par l'unité de commande (17) de l'éolienne (10) par l'intermédiaire d'un facteur global (Ib), ledit facteur global (Ib) comportant un premier facteur (Ib1) qui peut être calculé à partir de la différence entre la tension réelle (Uist) appliquée à l'éolienne (10) et la valeur de consigne de la tension (Usoll), multipliée par un facteur d'amplification (kIb).

11. Parc éolien selon la revendication 10, **caractérisé en ce que** le facteur global (Ib) comporte encore un autre facteur (Ib2) à additionner au premier facteur (Ib1), le facteur (Ib2) pouvant être calculé à partir de la différence entre une tension réelle (Uist;moyennée), moyennée sur une période définie et appliquée à l'éolienne (10), et la valeur de consigne de la tension (Usoll), multipliée par un facteur d'amplification (kIb).

12. Parc éolien selon la revendication 10, **caractérisé en ce que** le facteur global (Ib) comporte encore un autre facteur (Ib2) à additionner au premier facteur (Ib1), le facteur (Ib2) pouvant être calculé à partir de la différence moyennée sur une période définie entre la tension réelle (Uist) appliquée à l'éolienne et la valeur de consigne de la tension (Usoll), multipliée par un facteur d'amplification (kIb).

13. Parc éolien selon la revendication 10, **caractérisé en ce que** le facteur global (Ib) comporte encore un autre facteur (Ib2) à additionner au premier facteur (Ib1), le facteur (Ib2) pouvant être calculé à partir de la différence entre la tension réelle (Uist) appliquée à l'éolienne (10) et la valeur de consigne de la tension (Usoll;moyennée) moyennée sur une période définie, multipliée par un facteur d'amplification (kIb).

14. Parc éolien selon l'une quelconque des revendications 10 à 13, **caractérisé en ce que** le facteur d'amplification (kIb) est composé d'un facteur d'amplification global (kIb;global) et d'un facteur d'amplification individuel (kIb;WEA) pour chaque éolienne (10).

15. Parc éolien selon la revendication 14, **caractérisé en ce que** le facteur d'amplification global (kIb;global) et/ou les facteurs d'amplification individuels (kIb;WEA) sont déterminés par le maître de parc (50) et sont transmis vers les unités de commande (17) des différentes éoliennes (10).

16. Parc éolien selon l'une quelconque des revendications 10 à 15, **caractérisé en ce que** la différence entre la tension réelle (Uist) appliquée à l'éolienne (10) ou la tension réelle (Uist;moyennée) moyennée sur une période définie et présente sur l'éolienne (10) et la valeur de consigne de la tension (Usoll) est diminuée par un facteur de correction de la tension de consigne (deltaUsoll;WEA), un facteur de correction de la tension de consigne individuel (deltaUsoll;WEA) étant prévu pour chaque éolienne (10).

17. Parc éolien selon la revendication 16, **caractérisé en ce que** le facteur de correction de la tension de consigne (deltaUsoll;WEA) est déterminé par le maître de parc (50) et transmis aux unités de commande (17) des différentes éoliennes (10).

18. Parc éolien selon l'une quelconque des revendications 14 à 17, **caractérisé en ce qu'**au moins deux éoliennes (10) sont regroupées en un groupe, les unités de commande (17) des éoliennes (10) d'un groupe étant exploitées avec un facteur d'amplification individuel (kIb;WEA) commun et/ou un facteur de correction de la tension de consigne individuel (deltaUsoll;WEA) commun.

**Fig. 1**

# Fig. 2

a)

b)

c)

d)

e)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008048258 A1
- EP 1643609 A2
- DE 102007044601 A1
- EP 2108828 A2